# EUROPEAN PATENT SPECIFICATION

(11) **EP 0 476 975 B1**
(45) Date of publication and mention of the grant of the patent: **08.05.1996**
(21) Application number: 91308478.6
(22) Date of filing: 17.09.1991
(51) Int. Cl.: H01J 31/12

(54) **Flat panel display device**
Flache Bildschirmanordnung
Dispositif d'affichage à panneau plat

(30) Priority: 19.09.1990 IL 95736
(43) Date of publication of application: 25.03.1992
(73) Proprietor: YEDA RESEARCH AND DEVELOPMENT COMPANY LIMITED, Rehovot 76100 (IL)
(72) Inventor: Shenkar, Victor, Ramat Gan, Israel 52595 (IL); Naaman, Ron, Ness Ziona (IL); Vager, Zeev c/o The Weizmann Institut of Science, Rehovot, Israel 76100 (IL)
(74) Representative: Smith, Norman Ian

(56) References cited:
- EP-A- 0 107 217
- EP-A- 0 353 632
- GB-A- 1 295 832
- US-A- 4 577 133

## Description

### FIELD OF THE INVENTION

The present invention relates to flat panel display devices, and more particularly to flat panel devices utilizing selectively actuatable cold cathode or electron-tunnel junctions for activating electron-multiplier means, which in turn activate a luminescing screen.

### BACKGROUND OF THE INVENTION

Flat panel displays have been proposed in the past. For example, U.S. Patent 3,500,102 discloses two superposed substrates of dielectric material respectively supporting a first and a second group of intersecting spaced-apart conductors, a plurality of openings made in one of said substrates, each opening extending through the distance between said conductors and each opening housing a semiconductor which is in contact with both conductors. When a potential difference is applied between conductors, bracketing an opening, electrons are emitted from the semiconductor to be accelerated towards a screen.

The U.S. Patent 4,857,799 discloses a matrix-addressed, flat panel display having a matrix array of cathodes. Each of the cathodes consists of an array of field emitter tips projecting from the face of a substrate on which they are mounted. Adjacent the tips, there are positioned electrically conductive gates in order to generate and to control electron emission from the tips.

In EP-A-0353632 there is described a multi-layer arrangement of partially conductive material consisting of packed particles, for use as an electron multiplier.

US-A-4577133 discloses, according to the preamble of claim 1, a flat panel display having electron multiplying means sandwiched between means for generating a low energy flow of electrons and a phosphor screen. The electron multiplying material is packed in holes etched through a plate.

It is one of the broad objects of the present invention to utilize the advantages of the improved electron multiplier of EP-A-0353632 and to provide a flat panel display device employing same.

It is a further broad object of the invention to provide a flat panel display device employing selectively actuatable cold cathodes or electron-emitting junctions as sources of electron emission activators for electron-multipliers of any suitable type.

According to the present invention there is provided a flat panel display device, comprising:
a flat panel display device, comprising:
a backplate and a transparent front plate delimiting an hermetically sealed vacuum space;
an array of selectively actuatable electron-emitting cold cathodes disposed adjacent to, or on said backplate;
a perforated plate placed in, at least, close proximity to said array of cold cathodes, said perforated plate including electron multiplier means disposed in said perforations, and
a luminescing surface capable of emitting light upon being impinged upon by a pulse of electron beam, characterised in that said electron multiplier means comprises a collection of partially conductive electron-emitting packed particles.

The invention will now be described in connection with certain preferred embodiments, with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

### BRIEF DESCRIPTION OF THE DRAWINGS

In the drawings:
Fig. 1 is a cross-sectional view of a flat panel display device according to the present invention;
Fig. 2 is an exploded view of the device of Fig. 1;
Fig. 3 is a cross-sectional view of a modification of the device of Fig. 1;
Fig. 4 is an exploded view of the device of Fig. 3, and
Fig. 5 is an exploded view of another embodiment of a flat panel display device according to the present invention.

### DETAILED DESCRIPTION OF PREFERRED EMBODIMENTS

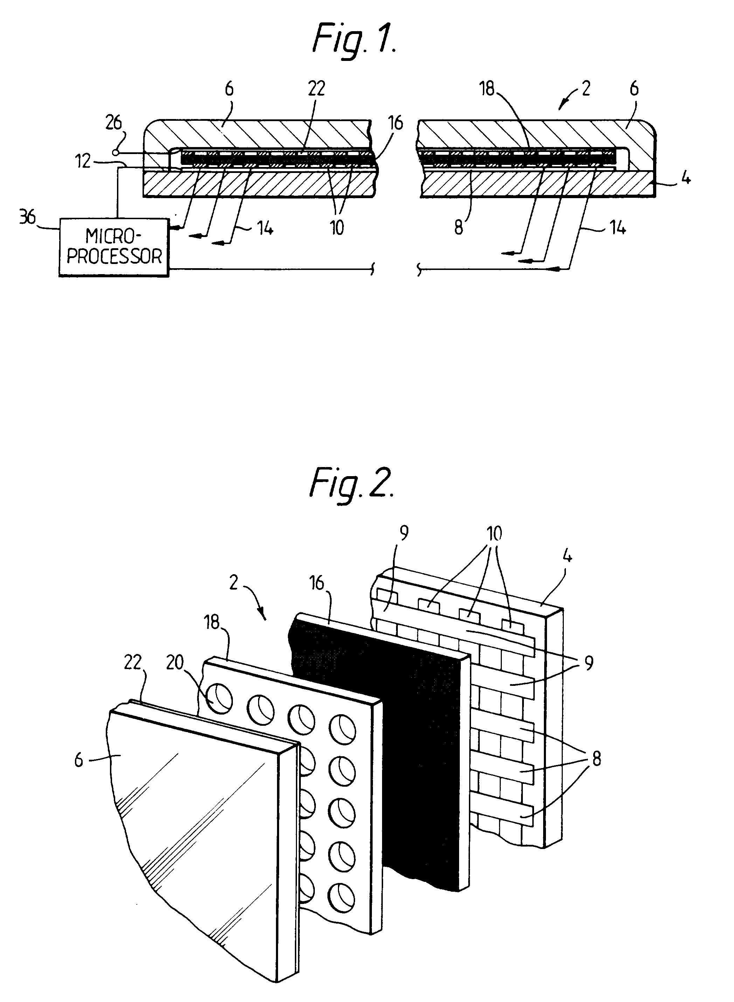

Referring to Figs. 1 and 2, there is shown a flat panel display device 2 which includes a backplate 4, made of a suitable insulating material, and a transparent front face 6, usually made of glass. The backplate 4 and the front face are hermetically sealed so as to form a vacuum space thereinbetween. On the inside surface of backplate 4 there are affixed rows 8 and columns 10 of thin-film conductors separated by a thin layer of oxide thereby incorporating an array of, per-se known, cold cathodes or electron-emitting junctions 9. Each cold cathode or junction is thus individually addressable and hence selectively actuatable when signals are applied to end terminals 12 and 14 of respectively both the rows 8 and the columns 10.

The array of cold cathodes may be directly formed on the backplate 4 as shown, or alternatively, may be formed on a separate plate which will eventually be affixed onto the backplate 4.

Further seen in the figures is a stratum or layer 16 comprising a collection of partially conductive electron-emitting packed particles of the type described in EP-A-0353632.

Superposed on the layer 16, constituting an electron-multiplier, is a perforated spacer 18, made of an insulating material and having an array of apertures 20 each configured as desired, however, arranged to be aligned, in assembly, with the cold cathodes or junctions 9. The combination of the superposed electron multiplier layer 16 and the perforated spacer 18, form minute sites arranged in a matrix.

The inside face of the transparent front face 6 is lined with luminescing material, forming a screen 22 having a thin coating of, or being intermixed with, a metallic substance constituting an anode, to which anode there is connected an electrical terminal 26.

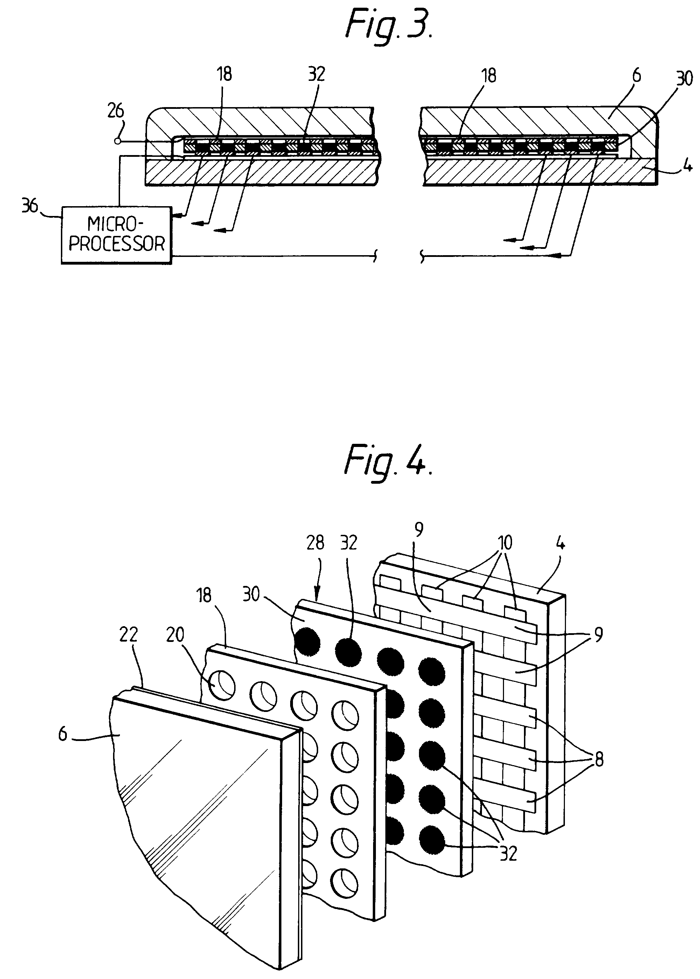

A modification of the electron-multiplier/spacer arrangement is illustrated in Figs. 3 and 4. Seen is a substrate 28 of a combination of an insulating apertured layer 30 and electron-multiplier sites 32 disposed in the apertures. It is understood that the cold cathodes or junctions 9, the sites 32 and the apertures 20 of the spacer 18, should all be properly aligned in order to form passages of discrete beams of electrons originating at the cold cathodes or junctions 9 and terminating at the screen 22.

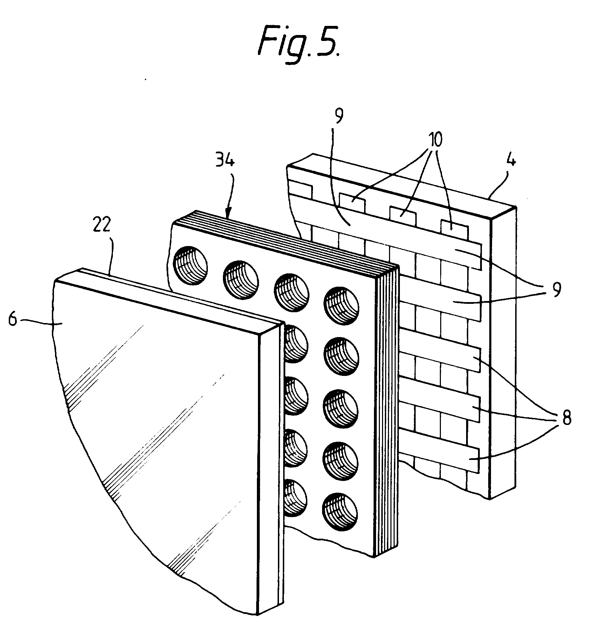

Turning now to Fig. 5, there is illustrated an electron-multiplier of a different type. Interposed between the cold cathodes or junctions 9 and the screen 22 is a channel-electron multiplier 34, per-se known and which need not be described in detail. The point to note is, however, that the apertures of each layer of the multiplier 34 are aligned with the cold cathodes or junctions 9 so as to form unobstructed channels leading from the cold cathodes or junctions 9 to the screen 22.

While for the sake of simplicity, the above description refers to displays emitting light of various degrees of brightness ("black and white"), colored vision can be obtained by providing a screen including luminescing substances capable of emitting light in each of the three primary colors red, green and blue, and, of course, combinations thereof, and correspondingly, there must be provided cathodes for separatly activating each of the distinct colors.

In order to compose a meaningful picture, conventional driving electronic circuitry, e.g., a microprocessor 36 (Figs. 1 and 3) is provided. A coincident appearance of signals at a row 8 and a column 10 will instigate an electron emission from a junction of the row and column. The relatively weak electron emission from a junction is directed towards an electron multiplier site or channel, which site is excited by the weak emission to produce an electronic beam of a sufficient intensity to cause a positively polarized luminescing screen to generate light. The intensity of the emitted light is also controllable by, inter-alia, the amplitude and duration of the signals applied to the junctions.

The array of junctions and the discrete electron-multiplier sites may be arranged in any desired geometric pattern, for example, an arrangement for obtaining a radial scanning effect usable for radar reception. Also, with certain known modifications, the display device may be adapted to become a camera tube device or a storage tube device.

## Claims

1. A flat panel display device, comprising:
a backplate (4) and a transparent front plate (6) delimiting an hermetically sealed vacuum space;
an array of selectively actuatable electron-emitting cold cathodes (9) disposed adjacent to, or on said backplate (4);
a perforated plate (28) placed in, at least, close proximity to said array of cold cathodes (9), said perforated plate (28) including electron multiplier means (32) disposed in said perforations, and
a luminescing surface (22) capable of emitting light upon being impinged upon by a pulse of electron beam, characterised in that said electron multiplier means comprises a collection of partially conductive electron-emitting packed particles.

2. A device as claimed in claim 1, wherein said electron multiplier means (32) comprises a collection of metal-doped packed glass particles.

3. A device as claimed in claim 1, wherein said array of cold cathodes (9) is made of thin-film conductors separated by a thin layer of oxide.

## Patentansprüche

1. Flache Bildschirmanordnung, die enthält:
eine einfache Grundplatte (4) und eine transparente vordere Sichtplatte (6), zwischen denen sich ein hermetisch verschlossener evakuierter Zwischenraum befindet; in regelmäßiger Gruppierung angeordnete selektiv aktualisierbare stromsendende Kaltkathoden (9) in naher oder direkter Zuordnung zu der Grundplatte (4);
eine perforierte Platte (28) in direkter oder zumindest naher Zuordnung zu den regelmäßig angeordneten Kaltkathoden, wobei diese perforierte Platte (28) ein elektronisches Multipliziermittel (31) in der Zuordnung zu den Perforationen aufnimmt und
eine lumineszierende Oberfläche (22) zum Aussenden von Licht, nachdem sie den Impuls eines elektronischen Strahls erhalten hat,
gekennzeichnet dadurch, daß das elektronische Multipliziermittel eine Zusammenstellung teils leitender elektronenabgebender gepackter Partikel einschließt.

2. Vorrichtung nach Anspruch 1, worin das elektronische Multipliziermittel (32) eine Zusammenstellung metall-legierter gepackter Glaspartikel aufweist.

3. Vorrichtung nach Anspruch 1, worin die regelmäßig angeordneten Kaltkathoden (9) aus Dünnfilmleitern gefertigt sind und durch dünne Oxidschichten voneinander getrennt sind.

## Revendications

1. Dispositif d'affichage à panneau plat, comprenant :
une plaque arrière (4) et une plaque avant transparente (6) délimitant un espace de vide hermétiquement clos ;
un ensemble de cathodes (9) froides émettant des électrons, sélectivement actionnables, disposé de façon contiguë à, ou sur la plaque arrière (4) ;
une plaque perforée (28) positionnée dans, au moins, à proximité immédiate de l'ensemble de cathodes froides (9), cette plaque perforée (28) comprenant des moyens multiplicateurs d'électrons (32) disposés dans ces perforations, et
une surface luminescente (22) pouvant émettre de la lumière dès qu'elle est frappée par une impulsion de faisceau d'électron, caractérisé en ce que les moyens multiplicateurs d'électrons comprennent un groupe de particules compactes partiellement conductrices, à émission d'électrons.

2. Dispositif selon la revendication 1, dans lequel les moyens multiplicateurs d'électrons (32) comprennent un groupe de particules de verre compactes dopées au métal.

3. Dispositif selon la revendication 1, dans lequel l'ensemble de cathodes froides (9) est réalisé à partir de conducteurs à film mince séparés par une couche mince d'oxyde.
